# EUROPEAN PATENT APPLICATION

(11) **EP 0 894 837 A1**
(43) Date of publication of application: **03.02.1999**
(21) Application number: 97917396.0
(22) Date of filing: 16.04.1997
(51) Int. Cl.: C09D 127/12, C09D 127/18

(54) **FLUORORUBBER COATING COMPOSITION AND COATED ARTICLES**

(30) Priority: 16.04.1996 JP 93940/96
(71) Applicant: DAIKIN INDUSTRIES, LIMITED, Osaka-shi Osaka 530 (JP)
(72) Inventor: TOMIHASHI, Nobuyuki, Yodogawa Works of, Settsu-shi, Osaka 566 (JP); OGITA, Koichiro, Yodogawa Works of, Settsu-shi, Osaka 566 (JP); TERASAKA, Kiyotaro, Yodogawa Works of, Settsu-shi, Osaka 566 (JP); KINOSHITA, Toshiyuki, Yodogawa Works of, Settsu-shi, Osaka 566 (JP)
(74) Representative: HOFFMANN - EITLE
(86) International application number: JP9701306
(87) International publication number: WO9739071

(57) **Abstract**

A fluororubber coating composition comprising a fluororubber and a copolymer of tetrafluoroethylene, hexafluoropropylene and a perfluorovinyl ether, in a weight ratio of from 95:5 to 20:80. This composition can be processed in a limited processing temperature range of between 150°C and 300°C, and form a coating film having good surface smoothness, non-tackiness and abrasion resistance.

## Description

### FILED OF THE INVENTION

The present invention relates to a fluororubber coating composition having good processability and non-tackiness, and a coated article having a coating film formed from such a coating composition.

### PRIOR ART

Coating compositions comprising a fluororesin or fluororubber are used to coat the surfaces of rolls which are used in office automation equipment. However, a processing temperature in the coating process of such coating compositions cannot be raised, since the substrate material of such rolls is usually a silicone rubber. Thus, tetrafluoroethylene-hexafluoropropylene copolymers (FEP) are largely used as fluororesins to be contained in such coating compositions. However, FEP may not satisfy requirements to further increase the non-tackiness and abrasion resistance of coating films.

### SUMMARY OF THE INVENTION

One object of the present invention is to provide a coating composition comprising a fluororesin and a fluororubber, which can be processed in a processing temperature range of from 150 to 300°C and form a coating film having good surface smoothness, non-tackiness and abrasion resistance.

Accordingly, the present invention provides a fluororubber coating composition comprising a fluororubber and a copolymer of tetrafluoroethylene (hereinafter referred to as "TFE"), hexafluoropropylene (hereinafter referred to as "HFP") and a perfluorovinyl ether (hereinafter referred to as "PFVE"), in a weight ratio of from 95:5 to 20:80.

Furthermore, the present invention provides a coated article having a substrate and a coating film formed from the above-described fluororubber coating composition on the surface of said substrate, in which, the content of the TFE-HFP-PFVE copolymer in the surface layer of said coating film is larger than that in a layer adjacent to said substrate.

### DETAILED DESCRIPTION OF THE INVENTION

A fluororubber contained in the composition of the present invention preferably comprises -CH₂- groups in the backbones. That is, a preferable fluororubber is a copolymer comprising
a monomer which provides repeating units having -CH₂- groups (e.g., vinylidene fluoride (CF₂=CH₂), ethylene (CH₂=CH₂), propene (CH₂=CHCH₃), etc.), and
at least one fluorine-containing monomer selected from the group consisting of fluorine-containing aliphatic monomers (e.g., tetrafluoroethylene (CF₂=CF₂), hexafluoropropene (CF₂=CFCF₃), chlorotrifluoroethylene (CF₂=CFCl), pentafluoropropene (CF₂=CFCF₂H), etc.) and fluorine-containing vinyl ethers (PFVE) represented by the formula:

   CF₂=CFO(CF₂)ₙCF₃

   wherein n is a number of 0 to 9,

   CF₂=CFO(CF₂CF₂CF₂O)ₘ-CF₂CF₂CF₃,

   wherein m is a number of 1 to 5,

   CF₂=CFO[CF₂CF(CF₃)O]ₘ-CF₂CF₂CF₃,

   wherein m is a number of 1 to 5,

   CF₂=CFO[CF₂CF(CF₃)O]ⱼ-CF₂CF₂CH₂I

   wherein j is a number of 1 to 5, and

   CF₂=CFCF₂OCH₂(CF₂)ₖX

   wherein k is a number of 1 to 12, and X is a hydrogen atom, a fluorine atom or a chlorine atom.

Specific examples of the fluororubber are (1) a copolymer comprising a monomer providing repeating units having -CH₂- groups and the above fluorine-containing aliphatic monomer, (2) a fluororubber comprising a monomer providing repeating units having -CH₂- groups and the above PFVE, and (3) a copolymer comprising a monomer providing repeating units having -CH₂- groups, the above fluorine-containing aliphatic monomer and the above PFVE, in each of which, the molar ratio of the monomer providing repeating units having -CH₂- group to the total amount of other monomer(s) is in the range between 30:70 and 85:15.

The molecular weight of the fluororubber is preferably from 5,000 to 200,000.

Specific examples of PFVE in the TFE-HFP-PFVE copolymer contained in the composition of the present invention are

CF₂=CFO(CF₂)ₙCF₃

wherein n is a number of 0 to 9,

CF₂=CFO(CF₂CF₂CF₂O)ₘ-CF₂CF₂CF₃,

wherein m is a number of 1 to 5,

CF₂=CFO[CF₂CF(CF₃)O]ₘ-CF₂CF₂CF₃

, wherein m is a number of 1 to 5,

CF₂=CFO[CF₂CF(CF₃)O]ⱼ-CF₂CF₂CH₂I

wherein j is a number of 1 to 5, and

CF₂=CFCF₂OCH₂(CF₂)ₖX

wherein k is a number of 1 to 12, and X is a hydrogen atom, a fluorine atom or a chlorine atom.

The monomeric composition of the TFE-HFP-PFVE copolymer comprises 75 to 90 wt. % of TFE, 5 to 20 wt. % of HFP and 0.1 to 5 wt. % of PFVE, preferably, 8 to 20 wt. % of HFP and 0.3 to 5 wt. % of PFVE, more preferably 10 to 20 wt. % of HFP and 0.5 to 5 wt. % of PFVE.

When the content of TFE exceeds 90 wt. %, the processability of the composition deteriorates and the surface smoothness is impaired. Furthermore, the abrasion resistance also deteriorates. When the content of TFE is less than 75 wt. %, the heat resistance of the composition may deteriorate.

The melting point of the TFE-HFP-PFVE copolymer is usually 300°C or less, preferably from 200°C to 280°C.

The weight ratio of the fluororubber to the TFE-HFP-PFVE copolymer is from 95:5 to 20:80, preferably from 90:10 to 30:70.

When the amount of the fluororubber exceeds 95 wt. %, the desired non-tackiness may not be attained. When the amount of the fluororubber is less than 20 wt. %, the rubber-elasticity of the film deteriorates, and also the coating defects tend to appear.

Conventionally used vulcanizing agents for fluororubbers may be used to vulcanize the composition of the present invention. Preferable examples of the vulcanizing agents are as follows:
(1) polyamines, such as aliphatic polyamines (e.g., triethylenetetramine, tetraethylenepentamine, ethylenediamine, trimethylenediamine, ethanolamine, 3,9-bis(3-aminopropyl)-2,4,8,10-tetraoxa-2-spiro[5.5]undecane, etc.) and their salts; aromatic polyamines (e.g., diaminodiphenylmethane, xylylenediamine, phenylenediamine, diaminodiphenylsulfone, etc.) and their salts; modified polyamines, polyamideamines; and the like,
(2) polyols, such as phenol derivatives (e.g., bisphenol AF, hydroquiones, etc.); polyhydroxycompounds having enol type hydroxyl groups (e.g., phenol resins, etc.); Rf(CH₂OH)₂ in which Rf is a perfluoroalkyl group; and the like.
(3) polythiols, such as triazinethiol, 1,6-hexanedithiol, 4,4'-dimercaptodiphenyl, 1,5-naphthalenedithiol, and the like.

In addition to the above vulcanizing agents, any commercially available vulcanizing agents for fluororubbers may be used. Preferably, a vulcanizing agent is used, which is soluble in an organic solvent when a medium is an organic solvent, or in water when a medium is water.

The vulcanizing agent may be used in an amount of 0.1 to 20 wt. parts, preferably 0.5 to 5 wt. parts, per 100 wt. parts of the fluororubber.

Vulcanizing aids may be used to accelerate the vulcanization. Examples of the vulcanizing adis include quaternary ammonium salts such as DBU-b (diazabicycloundecene benzyl chloride); tertiary amines such as DABCO (diazabicyclooxtane); quaternary phosphonium salts such as triphenylphosphine benzyl chloride; and the like.

The vulcanizing aid may be used in an amount of 0 to 10 wt. parts, preferably 0.1 to 5 wt. parts, per 100 wt. parts of the fluororubber. Preferably, a vulcanizing aid is used, which is soluble in an organic solvent when a medium is an organic solvent, or in water when a medium is water.

The medium of the composition of the present invention may be either an organic solvent or water. Herein, the "medium" is intended to mean a material in which other components of the composition of the present invention are dissolved or dispersed.

Examples of organic solvents include ketones (e.g., methyl ethyl ketone, methyl isobutyl ketone, etc.), acetate esters (e.g., butyl acetate, etc.), ethers (e.g., diethylene glycol dimethyl ether, etc.), hydrocarbons (e.g., toluene, xylene, etc.), amides (e.g., N,N-dimethylacetoamide, N-methyl-2-pyrollidone, etc.), and the like.

The amount of an organic solvent is from 40 to 90 wt. % based on the whole weight of the coating composition.

When water is used as a medium, dispersants may be used to disperse the fluororubber and TFE-HFP-PFVE copolymer in water.

Examples of the dispersants include anionic surfactants (e.g., laurylsulfate salts, perfluoroalkylcarboxylate salts, ω-hydroperfluoroalkylcarboxylate salts, etc.), nonionic surfactants (e.g., polyethylene glycol derivatives, polyethylene glycol-polypropylene glycol derivatives, etc.), resin type dispersants (e.g., alkyl polyethylene glycol ether, alkylphenyl polyethylene glycol ether, alkyl polyethylene glycol ester, ethylene glycol-propylene glycol copolymers, polyethylene glycol dialkyl esters, etc.), and the like.

Water is used in an amount of 30 to 90 wt. % based on the whole weight of the coating composition. The dispersant may be used in an amount of 0.1 to 10 wt. % based on the whole weight of the coating composition.

Among the compositions, aqueous coating compositions are preferable in view of environmental protection.

The coating composition of the present invention may optionally contain any other additives for fluororubber coating compositions such as fillers, colorants, stabilizers, acid scavengers, and the like, in addition to the above components.

Examples of the filers are carbon black, white carbon, mica, zinc oxide, barium sulfate, calcium carbonate, talc, and the like. The fillers may be used in an amount of 200 wt. parts or less per 100 wt. parts of the fluororubber.

Examples of the colorants are inorganic pigments (e.g., titanium oxide, red oxide, complex inorganic oxides, etc.), and organic (organometallic) pigments (e.g., phthalocyanine pigments, perylene pigments, etc.). The colorants may be used in an amount of 20 wt. parts or less per 100 wt. parts of the fluororubber.

The stabilizers are used to suppress reactions such as vulcanization during the storage of the composition of the present invention. Examples of the stabilizers are organic acids such as acetic acid, organic acid anhydrides such as acetic anhydride, and the like.

Acid scavengers may be added into the composition to capture hydrogen fluoride which is generated during the vulcanization. Examples of the acid scavengers include magnesium oxide, calcium hydroxide, hydrotalcite, zinc oxide, lead monooxide (litharge), and the like.

Tackifiers may be added to the composition of the present invention, if it is necessary to improve the affinity of a coating film to a substrate or a primer coating coated on a substrate, when the composition of the present invention is applied on a substrate. When a substrate is a metal or glass, tackifiers may be coupling agents such as silane coupling agents, titanium coupling agents, aluminum coupling agents and the like. Vulcanizing agents which have adhesion properties, such as polyamideamines and phenol resins, can function as tackifiers depending on the added amount.

The composition of the present invention may be prepared, stored and used in the form of a one-pack type composition, while it may be prepared and stored in the form of a two-pack type composition for the purpose of storage stability, and then the two liquids are mixed prior to the use of the composition.

The preparation method of the composition of the present invention will be explained by way of example.

In the case of a two-pack type composition comprising an organic solvent as a medium, a fluororubber, a TFE-HFP-PFVE copolymer, and optional additives such as a filler, an acid scavenger and a colorant are mixed with an open roll mill or a kneader to obtain a compound. Then, the compound is dissolved or dispersed in an organic solvent, and a stabilizer may optionally be added to the mixture to obtain liquid A. Separately, a vulcanizing agent, an optional vulcanizing aid and an optional tackifier are dissolved in an organic solvent to obtain liquid B.

In the case of a one-pack type one, liquids A and B are mixed from the beginning.

In the case of a two-pack type composition comprising water as a medium, a concentrate is prepared from the aqueous dispersion of a fluororubber which has been prepared by dispersing the fluororubber in water in the presence of a dispersant. A fluororubber latex may be used as such. A TFE-HFP-PFVE copolymer is usually prepared by emulsion polymerization, and used in a concentrated form like the fluororubber latex. They can be easily mixed since both are aqueous dispersions. The optional additives such as a filler, a colorant and an acid scavenger are mill-dispersed using dispersants in advance. These liquids are mixed with the optional addition of a stabilizer. Further, the concentration and viscosity of the mixture are adjusted with water to obtain liquid A. Separately, the aqueous solution of a vulcanizing agent and a vulcanizing aid is prepared when they are water-soluble, or the aqueous dispersion of a vulcanizing agent and a vulcanizing aid is prepared using a dispersant when they are water-insoluble, and a tackifier is optionally added to obtain liquid B. In the case of a one-pack type composition, both liquids A and B are mixed from the beginning.

The present invention also relates to a coated article produced by applying the coating composition of the present invention onto the surface of an article and baking it.

As substrates, metals (e.g., iron, stainless steel (SUS), copper, aluminum, etc.), glass, resin-molded articles, rubber-molded articles, woven fabric of glass fiber, woven fabric of natural or synthetic fiber, and the like can be used.

One embodiment of the coating method of the coating composition will be explained.

Firstly, a substrate is thoroughly defatted and washed, and a primer coating is optionally applied depending on the properties of the substrate. Then, the coating composition of the present invention is applied by, for example, spray coating, dip coating, flow coating, screen coating, etc.

In the case of a two-pack type composition, two liquids are mixed just before the application to prepare a coating composition. After the application, the applied composition is pre-dried around 100°C to evaporate off water or the organic solvent. Thereafter, the article is baked at a temperature of 150 to 300°C for 10 to 120 minutes. During baking, the fluororubber is vulcanized, and the fluororubber and TFE-HFP-PFVE copolymer are bound.

The content of the TFE-HFP-PFVE copolymer in the surface layer of the coating film of the coated article according to the present invention is larger than that in a layer adjacent to the substrate. This is supported by the larger contact angle of Solvesso #150, which is a measure to evaluate the non-tackinesss, and carried out in the below-described examples. The contact angle on the surface layer is usually at least 53 degrees, preferably at least 55 degrees.

In addition, the coating film of the coated article according to the present invention has good durability. For example, the coating film has the durability of at least 3500 revolutions, preferably 5000 revolution in the durability test which is carried out in the below-described examples.

The coating composition of the present invention can be used to improve the surfaces of substrates in fields requiring heat resistance, solvent and chemical resistance, and non-tackiness. For example, the coating composition of the present invention can be used to improve the surface properties of fixing rolls, pressure rolls and conveying belts of copying machines; sheets and belts comprising fabric impregnated with rubbers; O-rings, diaphragms, chemical-resistant tubes and fuel hoses made of general fluororubbers; sealing materials such as engine head gaskets; and the like. Furthermore, the coating composition of the present invention can be applied to precoated metals to prevent the sticking of fluororubbers.

### EXAMPLES

### Example 1

The latex of a fluororubber (vinylidene fluoride-hexafluoropropylene-tetrafluoroethylene copolymer) (DAIEL Latex GL-152A manufactured by Daikin Industries, Ltd.; a fluororubber content of 43 wt. %) (100 wt. parts) was mixed with an emulsion-polymerized copolymer of TFE, HFP and PFVE (CF₂=CFOCF₂CF₂CF₃) in a weight ratio of 86.5:12.5:1.2 (which had been prepared by concentrating a polymerization reaction mixture to a polymer concentration of 43 wt. %) (100 wt. parts), to obtain Liquid A.

Separately, the mixture of a polyamine vulcanizing agent (EPOMATE F-100 manufactured by YUKA SHELL Co., Ltd.) and a silane coupling agent (manufactured by NIPPON UNICAR Co., Ltd.) in a weight ratio of 1:4 (30 wt. parts) was dissolved in water (70 wt. parts) to obtain Liquid B.

Then, 100 wt. parts of Liquid A and 20 wt. parts of Liquid B were mixed to obtain a coating composition containing a vulcanizing agent.

A silicone rubber was used as a substrate. The surface of the silicon rubber was coated with a primer GLP-103SR (manufactured by Daikin Industries, Ltd.) to a dry thickness of 5 µm or less, and dried at 80°C for 15 minutes. Then, the above-prepared coating composition containing the vulcanizing agent was spray coated on the primer layer, and dried at a temperature of 80 to 100°C and baked at 250°C for 20 minutes to obtain a coated plate having a film thickness of about 20 µm.

The surface smoothness, durability and non-tackiness of the coating film were evaluated or measured as follows:

### Surface smoothness

Average surface roughness Ra was measured using a non-contact surface roughness and shape meter (manufactured by TOKYO SEIMITSU KABUSHIKIKAISHA), and ranked according to the following criteria:
C: Ra = 0.6 or larger
B: Ra = 0.4 - 0.6
A: Ra = 0.2 - 0.4

### Durability

Using a taper abrasion tester, a piece of copying paper (High quality PPC paper available from Fuji Xerox Co., Ltd.) was adhered to a truck wheel with a double-coating adhesive tape. Then, the truck wheel was rotated under a load of 250 g. After rotating the wheel for the determined number of rotations, a drop of Solvesso #150 (manufactured by EXXON Chemical Co., Ltd. having a surface tension of 29.7 mN/m) was dropped on the surface of the coating film, and a contact angle was measured with a goniometer (manufactured by ELMER KOGAKU Co., Ltd. The number of rotations at which the contact angle decreased to 20 degrees or less was used as a measure of durability.

The reason why Solvesso #150 having a low surface tension was used is that the results of the measurement should not be affected by the surface roughness.

### Non-tackiness

The contact angle of Solvesso #150 on the coating film was measured prior to the durability test in the same manner as in the above durability test, and the measured contact angle was used as a measure of non-tackiness.

### Examples 2 to 7

A coating composition was prepared by carrying out the copolymerization in the same manner as in Example 1 except that the composition of TFE, HFP and PFVE, and the kind of PFVE were changed as shown in Table 1. Then, the properties of the coating film were measured and evaluated. The results are shown in Table 1.

### Comparative Examples 1 and 2

A coating composition was prepared by carrying out the copolymerization in the same manner as in Example 1 except that the composition of monomers was changed as shown in Table 1. Then, the properties of the coating film were measured and evaluated. The results are shown in Table 1.

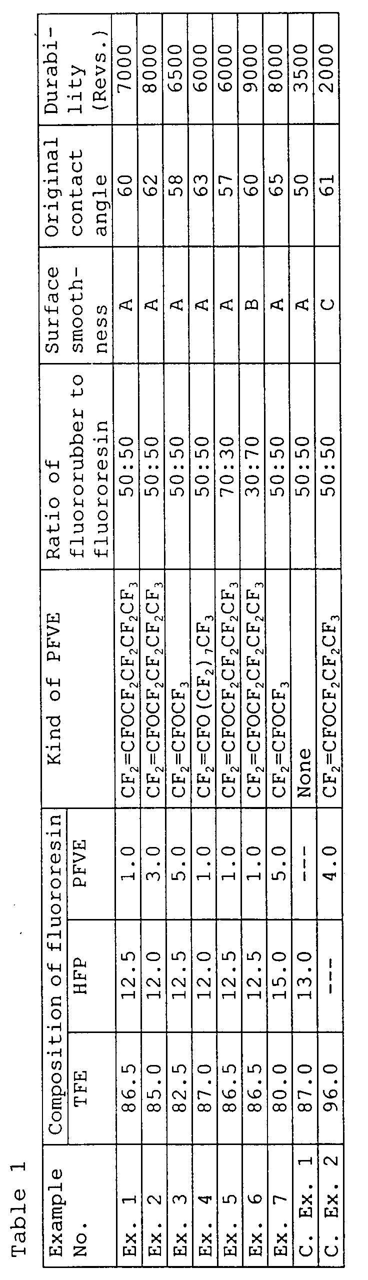

## Claims

1. A fluororubber coating composition comprising a fluororubber and a copolymer of tetrafluoroethylene, hexafluoropropylene and a perfluorovinyl ether, in a weight ratio of from 95:5 to 20:80.

2. A fluororubber coating composition according to claim 1, wherein said copolymer of tetrafluoroethylene, hexafluoropropylene and a perfluorovinyl ether comprises 75 to 90 wt. % of tetrafluoroethylene, 5 to 20 wt. % of hexafluoropropylene and 0.1 to 5 wt. % of a perfluorovinyl ether.

3. A coated article comprising a substrate, and a coating film formed, on the surface of said substrate, from a fluororubber coating composition which comprises a fluororubber and a copolymer of tetrafluoroethylene, hexafluoropropylene and a perfluorovinyl ether in a weight ratio of from 95:5 to 20:80, wherein the content of said copolymer of tetrafluoroethylene, hexafluoropropylene and a perfluorovinyl ether in the surface layer of said coating film is larger than that in a layer adjacent to said substrate.

4. A coated article according to claim 3, wherein said copolymer of tetrafluoroethylene, hexafluoropropylene and a perfluorovinyl ether comprises 75 to 90 wt. % of tetrafluoroethylene, 5 to 20 wt. % of hexafluoropropylene and 0.1 to 5 wt. % of a perfluorovinyl ether.
